# EUROPEAN PATENT SPECIFICATION

(11) **EP 1 343 851 B1**
(45) Date of publication and mention of the grant of the patent: **02.05.2007**
(21) Application number: 01270566.1
(22) Date of filing: 07.12.2001
(51) Int. Cl.: C09D 175/04, C08G 18/10, C08L 75/04

(54) **HIGHLY WEATHERABLE MOISTURE-CURABLE ONE-COMPONENT POLYURETHANE COMPOSITIONS**
SEHR BEWITTERUNGSFESTE FEUCHTIGKEITSHÄRTENDE 1K-POLYURETHANZUSAMMENSETZUNGEN
COMPOSITIONS DE POLYURETHANNE A UN COMPOSANT TRES RESISTANTES AUX INTEMPERIES ET DURCISSABLES A L'HUMIDITE

(30) Priority: 13.12.2000 JP 2000379381
(43) Date of publication of application: 17.09.2003
(73) Proprietor: Sika Technology AG, 6340 Baar (CH)
(72) Inventor: SUGIYAMA, Akira, Hiratsuka City, Kanagawa 254-0017 (JP); KUNITOMO, Takuya, Yamato City, Kanagawa 242-003 (JP)
(74) Representative: Sika Patent Attorneys
(86) International application number: PCT/EP2001/014390
(87) International publication number: WO 2002/048228

(56) References cited:
- EP-A- 0 947 529
- EP-A- 1 152 019
- US-A- 5 744 543
- US-A- 5 959 775

## Description

### Background of the Invention

### 1. Field of the Invention

The present invention relates to highly weatherable, moisture-curable, one-component polyurethane compositions which are suitably used as sealants, inner and outer use adhesives, and waterproofing materials for roofs and wall surfaces.

### 2. Description of the Prior Art

Conventionally, moisture-curable, one-component polyurethane compositions have mainly been used as selants, inner and outer use adhesives, and waterproofing materials for roofs and wall surfaces. These have, however, not been free from the problems, such as early surface deterioration and crack formation in cured products, when used under exposition to the outdoor environment.

With such backgrounds, the conventional moisture-curable, one-component polyurethane compositions have been prepared by addition of an antioxidant to retard the surface deterioration.

Further, a polyester having an excellent weatherability have been used as the prepolymer to be blended into the moisture-curable, one-component polyurethane composition, in place of the ordinary prepolymers.

Furthermore, in place of these moisture-curable, one-component compositions have in part been used, which cause less surface deterioration at the early stage of exterior exposition.

However, merely adding an antioxidant to the moisture-curable, one-component polyurethane compositions as mentioned above could not improve the weatherability well, so that a recipe for further improvement is desired.

Although use of a polyester as the prepolymer performs a sufficient improvement in the weatherability, economical problems are unavoidable, because of the polyester prepolymers are more expensive than those conventional prepolymers.

Also, the moisture-curable, modified silicone one-component compositions have such problems as that the adhesive strength is lower, as compared with the moisture-curable, one-component polyurethane compositions, and that the degree of surface deterioration turns more significant than those in moisture-curable, one-component polyurethane compositions, when exposed to outdoor conditions for a fairly long period of time.

### Summary of the Invention

In view of the above situations, an object of the present invention is to provide moisture-curable, one-component polyurethane compositions having a high weatherability, with a suppressed cost increase.

After exhaustive investigations to solve the problems as mentioned above, the inventors have accomplished the present invention. Thus, moisture-curable, one-component polyurethane compositions according to the present invention are one-component (i.e. one-component or single liquid) compositions curable with moisture in the air, and contain a main component which will form a polyurethane resin upon curing, and additives, wherein said additives comprise one or more photocurable materials selected from the group consisting of unsaturated acrylic compounds, polyvinyl cinnamate and azide-containing compounds, and a hindered amine photostabilizer.

The additives as mentioned above may preferably contain additionally a blocked amine compound which will form a primary or secondary amine group with moisture.

Further, the additives as above may preferably further contain a thixotropy endowing agent comprising an inorganic filler treated with an organic material selected from the group consisting of fatty acids, metal salts of fatty acids, fatty acid esters, resinic acids, surface active agents and polyacrylates.

Furthermore, the above additives may preferably contain a thixotropy endowing agent comprising a polyurea compound represented by the formula:

R¹(NHCON-R², -R³)ₘ

wherein R¹ is a residue originated from polyisocyanate; R² and R³ are residues each originated from a monoamine, and one of these residues may be a hydrogen atom; and m is an integer of 2 to 4.

Preferably, the thixotropy endowing agent comprising a polyurea compound may be added to the present composition in the form of a compound may be added to the present composition in the form of a paste formed by dispersing the agent in a phthalate ester compound.

The present moisture-curable, one-component polyurethane compositions are highly weatherable, and can be provided with lower costs than those using a polyester prepolymer or moisture-curable, modified silicone one-component compositions.

Moreover, the storage stability and thixotropy of the present compositions are much improved by blending a thixotropy endowing agent comprising an above polyurea compound to the additives.

### Description of the Preferred Embodiments

The present invention will more fully be described hereinafter. The moisture-curable, one-part, polyurethane compositions according to the invention are curable with moisture in the air. Thus they can be used, for example, for filling up crevices between material parts. Particularly, they are suitably used as sealants, inner and outer use adhesives, waterproofing material for roofs and wall surfaces, and other usages in the exterior exposition situation.

The present moisture-curable, one-component polyurethane compositions are prepared by blending a main component, which will form a polyurethane resin upon curing, with additives.

The main component, which will form a polyurethane resin upon curing are not particularly limitative, and may be any of those already known. For example, a prepolymer having polypropylene oxide as the principal chain skeleton and isocyanate group at the terminals is suitably used.

As for the isocyanate in such a prepolymer, there may be mentioned, for example, toluene 2,4-diisocyanate, toluene 2,6-diisocyanate, phenylene diisocyanate, xylylene diisocyanate, diphenylmethane diisocyanate, polyphenylmethane polyisocyanate (Polymeric MDI), naphtylene, 1,5-diisocyanate, triphenylmethane triisocyanate, and diphenyl sulfone diisocyanate; and those hydrogenated compounds, such as 1-methyl-2,4-diisocyanateocyclohexane, 1-methyl-2,6diisocyanatocyclohexane, and dicyclohexylmethane diisocyanate; ethylene diisocyanate, propylene diisocyanate, tetramethylene diisocyanate; propylene diisocyanate, tetramethylene diisocyanate, hexamethylene diisocyanate, and isophorone diisocyanate; and a dimer (urethodione diisocyanate) and trimer (isocyanurate triisocyanate) of these diisocyanates.

As for the additives used in the present invention, one ore more photocurable materials selected from the group consisting of unsaturated acrylic compounds, polyvinyl cinnamate and azide-containing compounds, are used, together with a hindered amine photostabilizer.

Photocurable material readily suffers from a chemical change in its molecular structure by rays of light within a fairly short period of time, with a physical change such as curing. Such compounds include organic monomers, oligomers, resins, and other compositions containing them. Typically, they are unsaturated acrylic compounds, polyvinyl cinnamate and azide-containing compounds, as mentioned above.

Suitable unsaturated acrylic compounds include acrylic and methacrylic monomers having one or more unsaturated groups, their oligomers, and mixtures thereof. There are illustrated propylene (or butylene or ethylene) glycol di(meth)acrylate, neopentyl glycol di(meth)acrylate, tetramethylene dimethacrylate, as monomers and oligomers having not higher than 10,000 of molecular weight.

Polyvinyl cinnamate is a photosensitive resin having cinnamoyl group as the photosensitive group, and includes that prepared by esterifying polyvinyl alcohol with cinnamic acid, and many other polyvinyl cinnamate derivatives.

Azide-containing compounds have been known as photosensitive resins having azide group as the photosensitive group. Photosensitive rubber liquid containing a diazide compound as photosensitizer, as well as those illustrated in "KANKOSEI JUSHI" (Photosensitive Resins), published on March 17, 1972, by "INSATSU GAKKAI" (Printing Academy), pages 93-, 106-, and 117-, may be used singly or as a mixture thereof. If desired, an additional sensitizer may be added.

Such a photocurable material suffers from a chemical change in the molecular structure by rays of light within a fairly short period of time, with a physical change such a curing.

Thus, it forms a film at the surface of the cured composition, and controls the effect of rays of light on polyurethane in the cured composition, thereby restraining the deterioration of polyurethane and the formation of cracks.

Blending ratio of the photocurable material per the amount of the main component as mentioned above (for example, a prepolymer having isocyanate group at the terminals) is preferably 0.5 to 50 parts by weight per 100 parts by weight of the main component. An amount less than0.5 part by weight causes insufficient photocurability in the resulting composition, which tends to provide lower weatherability. A blending amount exceeding 50 parts by weight does not improve the weatherability, when compared to that having 50 parts by weight blended, accordingly such an amount is uneconimical.

As for the photocurable materials selected from the group consisting of unsaturated acrylic compounds, polyvinyl cinnamate and azide-containing compounds, any of those commercially available may be suitably used.

Among them, unsaturated acrylic compounds are particularly preferred, because of effective improvement in the weatherability and the advantageous cost of production.

Hindered amine photostabilizer includes UV absorbers, which absorbs photoenergy such as from sun beams and fluorescent lamp to convert to harmless heat energy, and quenchers which extinct the active center excited by photoenergy. As for resins which readily deteriorates by light, heat stabilizer and antioxidant may combinedly used along with the photostabilizer, thereby their light resistance and weatherability being significantly improved.

Most of such hindered amine photostabilizers are commercially available, and include, for example, ADEKASTAB LA-52, LA-57, LA-62, LA-67, LA-63, LA-68, LA-77, LA-82 and LA-87 (manufactured by ASAHI DENKA KOGYO K.K.); bis (2,2,6,6-tetramethyl-4-piperidyl) sebacate, bis (1,2,2,6,6-pentamethyl-4-piperidyl) sebacate, 1-[2-(3,5-di-tert-butyl-4-hydroxyphenyl)-propionyloxy)ethyl]-4-[3-(3,5-di-tert-buty-4-hydroxyphenyl)propionyloxy]-2,2,6,6-tetramethylpiperidyl succinate, dimethyl- 1 -(2-hydroxyethyl)-4-hydroxy-2,2,6,6-tetramethylpiperidine polycondensate, poly[[6-1(1,1,3,3-tetramethylbutyl)imino-1,3,5-triazin-2,4-diyl][(2,2,6,6-tetramethyl-4-piperdyl)imino] hexamethylene [(2,2,6,6-tetramethyl-4-piperdyl)imino]], bis(1,2,2,6,6-pentamethyl-4-piperidyl) 2-(3,5-di-t-butyl-4-hydroxybenzyl)-2-n-butyl malonate and the like.

Hindered amine photostabilizer absorbs UV photoenergy, for example, from sun beams and fluorescent lamp, to convert to harmless heat energy. Thus, it controls UV absorption of polyurethane in the cured composition, thereby restraining the UV deterioration of polyurethane and formation of cracks.

Blending amount of the hindered amine photostabilizer per the amount of the main component as mentioned above (for example, a prepolymer having isocyanate group at the terminals) is preferably 0.01 to 10 parts by weight per 100 parts by weight of the main component. An amount less than 0.01 part by weight causes insufficient photostability in the resulting composition, which causes lower weatherability. A blending amount exceeding 10 parts by weight does not improve the weatherability, when compared with that having 10 parts by weight blended, accordingly such an amount is uneconomical.

Besides these photocurable materials and hindered amine photostabilizers, a blocked amine compound may be blended to the present additives, if desired.

Blocked amine compounds employed are those forming primary or secondary amino group with moisture, without substantial reaction with the isocyanate group (they may merely be referred to as "blocked amine compounds", hereinafter). Such blocked amine compounds include aldimines, ketimines, enamines, oxazolidines, and other condensates of an aldehyde ore ketone with a compound having at least one primary or secondary amino group and also having an active hydrogen, such as primary or secondary amino and hydroxyl groups (hereinafter, referred to as "active hydrogen compound"). Furthermore, compounds having two or more oxazolidine groups in the molecule, prepared by a reaction of N-hydroxyoxazolidine with an organic polyisocyanate, are included.

Typical active hydrogen compounds include those having a primary amino group and hydroxyl group, those having a secondary amino group and and hydroxyl group, those having a primary amino group, a secondary amino group and hydroxyl group, those having to primary amino groups, those having two secondary amino group, and those having a secondary amino group and two hydroxyl group.

Specifically, the active hydrogen compounds include 2-(2-aminoethoxy)ethanol, N-(2-aminoethylene)piperazine, ω-hydroxyhexyl-amine, N-methyl-1,6-hexanediamine, diethylenetriamine, N-(2-hydroxyethyl)ethylenediamine, 3-aminoethylpiperazine, N-2(2-hydoxyethyl)piperazine, polyamides obtained from fatty acids (for example, dimer acid and tall oil acid) and anhydrous piperazine, 1-amino-3-aminomethyl-3,5,5-trimethylcyclohexane, N-(methylaminoethyl)-piperazine, aniline, toluidine, xylidine, isophoronediamine, diaminocyclohexane, diaminodiphenylmethane, xylylenediamine, diaminobenzene, norbornanedimethylamine (2,5(2,6)-bis(aminomethyl)-bicyclo[2,2,1]-heptane), diaminomethylbicycloheptane, ethanolamine, diethanolamine, dipropanolamine, hexanolamine, Jeffamine D-230, D-400,D-2000 and T-403 (manufactured by Jefferson Chemical, U.S.), ethylenediamine, 1,3-diaminopropane, tetramethylenediamine, hexamethylenediamine, heptamethylenediamine, octamethylenediamine, decamethylenediamine, 4,4'-diaminodicyclohexylmethane, bisaminomethylcyclohexane, 2,5- or 2,6-diaminomethyl-bicyclo[2,2,1]heptane, 3(4),8(9)-bis(aminomethyl)-tricyclo[5,2,1,0,^{2, 6}]decane, diaminodiphenylmethane, diaminodiphenyl ether, phenylenediamine, 3,5-diethyltoluene-2,4- or -2,6-diamine, polyoxyalkylenediamine (obtained by addition polymerization of propylene oxide and/or ethylene oxide with water, ethylene glycol, propylene glycol, etc. and conversion of the hydroxyl groups in the resulting polyoxyalkylene glycol to amino groups), triamines, such as 1,3,5-tris(aminomethyl)benzene and 1,3,5-tris(aminomethyl)cyclohexane, and polyoxyalkylenetriamine (obtained by addition polymerization of propylene oxide and/or ethylene oxide with glycerol, trimethylolpropane, etc. and conversion of the hydroxyl groups in the resulting polyoxyalkylenetriol to amino groups).

Aldehydes and ketones to be condensated with the active hydrogen compounds include, for example, acetaldehyde, propionic aldehyde, butylic aldehyde, isobutylic aldehyde, trimethylacetaldehyde, triethylacetaldehyde, valeric aldehyde, allulolein, crotonic aldehyde, furfural, benzaldehyde, o-tolualdehyde, m-tolualdehyde, p-tolualdehyde, 4-ethylbenzaldehyde, 4-propylbenzaldehyde, 4-butylbenzaldehyde, 2,4-dimethylbenzaldehyde, 2,4,6-trimethylbenzahldehyde, p-anisic aldehyde, p-ethoxybenzaldehyde, acetone, methyl ethyl ketone, methyl isobutyl ketone, diethyl ketone, diisobutyl ketone, methylhepatone, cyclohexanone, trimethylcyclohexanone, isophorone, acetophenone, and the like. Reaction of the active hydrogen compound with an aldehyde or ketone may be conducted under the well known conditions.

For example, polyaldimine, a kind of the aldimines as mentioned above, is prepared as follows: a polyamine and an aldehyde are heated together in a solvent, such as toluene and xylene, in the presence of an acidic catalyst for an azeotropic dehydration reaction. The reaction is continued until the distillation of water into a water separator finishes to obtain a polyaldimine. As for the ratio of polyamine and aldehyde, 1 to 2 equivalent amount of the aldehyde based on 1 equivalent amount of the amine is appropriate. The reaction is generally over after several hours. After the reaction, the aldehyde and solvent are evaporated in vacuo from the reaction mixture to leave a polyaldimine.

Such a blocked amine compound forms a primary or secondary amino group in the presence of moisture. Accordingly, it restrains a direct reaction of the main component isocyanate with moisture, and the primary or secondary amino group originated from the blocked amine group readily reacts with the main component isocyanate, serving for curing of the composition. Since the curing reaction with the amino group generates no gas, such as carbon dioxide, the resulting cured products are free from blistering and peeling. Furthermore, the blocked amine compound reacts with the photocurable material as mentioned above, to form a film, thus, the weatherable effect of the photocurable material and accordingly the same effect in the cured product being enhanced.

Preferable blending amount of the blocked amine compound is 0.1 to 2.0 as the number ratio of the amino group in the hydrolyzed polyamine to the isocyanate group in polyisocyanate and/or polyurethane prepolymer having the isocyanate group. A blending ratio of less than 0.1 gives insufficient effect of the blocked amine compound on the improvement in curability and weatherability. A ratio exceeding 2.0 provides the formation of excessive amino groups, thus, the resulting cured composition being softened with a decreased water resistivity.

Additives according to the present invention may desirably further contain a thixotropy endowing agent. As for the agent, an inorganic filler treated with an organic material, as well as a polyurea compound, may be suitably used. These members can be used singly or combinedly.

Thixotropy endowing agent comprising an inorganic filler treated with an organic material, includes calcium carbonate treated a fatty acid, such as lauric, stearic, palmitic, oleic and linolic acids; calcium carbonate treated with a metal salt of a fatty acid, such as calcium palmitate, calcium stearate and sodium stearate; calcium carbonate treated with a fatty acid ester, such as stearyl stearate, lauryl stearate, methyl stearate, butyl stearate, stearyl palmitate, lauryl palmitate and methyl laurate; calcium carbonate treated with a resinic acid, such as with rosinic and abietic acids; calcium carbonate treated with an organic titanium compound, such as isopropyltriisosteroyl titanate; calcium carbonate treated with a surface active agent, such as alkyl benzenesulfonates; calcium carbonate treated with a polyacrylate; and talc and bentonite treated with an organic material in similar way as above.

Various thixotropy endowing agent comprising an inorganic filler treated with an organic material are commercially available. For example, MC Coat S, M White, Snow Light SSS, EC Series, MS Series, Cal Fine 500 and other Cal Fine Series from MARUO Calcium K.K.; RAITON Series from BIHOKU FUNKA KOGYO K.K.; NCC Series and TSS Series from NITTO FUNKA KOGYO K.K.; GERUTON 50, SL-101, HAKUENKA Series and HOMOKARU Series from SHIRAISHI K.K., are available.

Thixotropy endowing agent comprising a polyurea compound is a compound having multiple urea linkages in the molecule and is obtained by a reaction of polyisocyanate with a monoamine. Thus, the polyurea compound is represented by the formula:

R¹(NHCON-R², -R³)ₘ

Wherein R¹ is a residue originated from polyisocyanate, R² and R³ are residues each originated from a monoamine, and one of these residues may be a hydrogen atom; and m is an integer of 2 to 4; and obtained by a reaction of polyisocyanate [R¹(NCO)ₘ] with a monoamine [R²R³NH], wherein R¹, R², R³ and m have the same meanings as above.

The polyisocyanate is not limitative and may be any of known aliphatic, aromatic and alicyclic polyisocyanates. Specifically, it includes straight chain or branched aliphatic polyisocyanates having 2 to 8 carbon atoms; benzene or naphthalene polyisocyanates having no substituent or being substituted with a halogen atom or an alkyl group of 1 to 4 carbon atoms [the isocyanate group may be linked to the aromatic ring directly or via any crosslinking group (for example, an alkylene group of 1 to 4 carbon atoms)]; and alicyclic polyisocyanates of 3 to 6 carbon atoms [the alicyclic group may be substituted with methyl or other group, and the isocyanate group may be linked to the cycloalkyl ring directly or via any crosslinking group (for example, an alkylene group of 1 to 4 carbon atoms)].

More specifically, the polyisocyanate includes toluene 2,4-diisocyanate, toluene 2,6-diioscyanate, phenylene diisocyanate, xylylene diisocyanate, diphenylmethane diisocyanate, polyphenylmethane polyisocyanate (Polymeric MDI), naphtylene 1,5-diisocyanate, triphenylmethane triisocyanate, and diphenyl sulfone diisocyanate; those hydrogenated compounds, such as 1-methyl-2,4-diisocyanatocyclohexane, 1-methyl-2,6-diisocyanatocyclohexane, and dicyclohexylmethane diisocyanate; ethylene diisocyanaate, propylene diisocyanate, tetramethylene diisocyanate, hexamethylene diisocyanate, and isophorone diisocyanate; a dimer (urethodione diisocyanate) and trimer (isocyanurate triisocyanate) of these diisocyanates, and the like. These polyisocyanate compounds may be used singly or combinedly.

Among these polyisocyanates, an arylalkylaryl diisocyanate, such as diphenylmethane diisocyanate, is particularly preferred from the view point of thixotropy, production efficiency and costs.

The monoamine is not limitative and may be any of primary and secondary amines. R² and R³ are, respectively, hydrogen atom or a group of aliphatic hydrocarbons, alicyclic hydrocarbons or aromatic hydrocarbons which may be substituted, provided that R² and R³ are never hydrogen atom simultaneously.

Specifically, R² and R³ may be respectively, a hydrogen atom: a straight chain or branched, saturated or unsaturated aliphatic hydrocarbon group of 1 to 8 carbon atoms; an alicyclic group of 3 to 6 carbon atoms which may be substituted with an alkyl group of 1 to 4 carbon atoms; a benzene of naphthalene ring which may be substituted with a halogen atom or with an alkyl group of 1 to 4 carbon atoms; and aryl-substituted alkyl group of 1 to 4 carbon atoms; provided also that R² and R³ are never be hydrogen atom simultaneously.

More specifically, they may be, respectively an aliphatic primary amine, such as methylamine, ethylamine, propylamine, isopropylamine, butylamine, amylamine, and hexylamine; an aliphatic secondary armine, such as dimethylamine, diethylamine, dipropylamine, diisopropylamine, and dibutylamine; an aliphatic unsaturated amine, such as allylamine and diallylamine; an alicyclic amine, such as cyclopropylamine, cyclobutylamine, cyclopentylamine, and cyclohexylamine, and an aromatic amine, such as aniline, diphenylamine, methylaniline, ethylaniline, toludine, xylidine, benzylamine, naphthylamine, and the like. The monoamine used in the present invention is preferably a monoalkylamine, more preferably a straight chain alkylamine, among which n-butylamine is the most preferable, from the view points of thixotropy, production efficiency and costs.

Reaction conditions for the polyisocyanate and monoamine are not limitative. For example, the polyisocyanate and monoamine are subjected to a reaction under conventional conditions, by dissolving or dispersing in an ester plasticizer, which is inert to isocyanate, in a ratio of 1.0 to 1.1 (isocyanate group / amino or imino group), thereby to obtain a polyurea compound having multiple urea likages in the molecule, i.e. thixotropy endowing agent according to the present invention.

The ester plasticizer includes, for example, phthalate esters, adipate esters, azelainate esters, sebacate esters, sulfonate ester, trimellitate esters, phosphate esters, fumarate esters, maleate esters, and the like.

Specifically the phthalate esters include diisodecyl phthalate, dioctyl phthalate, 2-ethylhexyl phthalate, diisononyl phtalate, dibutyl phthalate, butyl benzyl phthalate, diheptyl phthalate, bis(9',10'-expoxyoctadecyl) 4,5-epoxyhexahydrophthalate, and the like. The adipate esters include dioctyl adipate, 2-ethylhexyl adipate, diisononyl adipate, diisodecyl adipate, and the like. The azelainate esters include di(2-ethylhexyl) azelainate, and the like. The sebacate esters include di(2-ethylhexyl) sebacate, and the like. The sulfonate esters include phenyl alkylsulfonates and the like. The trimellitate esters include tri(2-ethylhexyl) trimellitate and the like. The phosphate esters include triphenyl phosphate, tricresyl phosphate, trixylenyl phosphate, cresyl diphenyl phosphate, xylenyl diphenyl phosphate, tris(chloroethyl) phosphate, tris(dichloropropyl) phosphate, tris(β-chloropropyl) phosphate, tris(tribromophenyl) phosphate, tris(dibromophenyl) phosphate, tris(tribromoneopentyl) phosphate, and the like. The fumarate esters include butyl fumarate, bis(2-methylpropyl) fumarate, diisobutyl fumarate, bis(2-ethylhexyl) fumarate, and the like. The maleate esters include dimethyl maleate, diethyl maleate, and the like.

While, the thixotropy endowing agent dispersed in such a plasticizer constitutes a dispersion paste of the thixotropy endowing agent of the present invention, as mentioned below.

Since the thixotropy endowing agent comprising such a polyurea compound is free from water and silanol group, and inert to the polymer component, such problems as viscosity increase in the composition during the production or storage step are avoided. Thus, the composition containing such a polyurea compound has an excellent storage stability, and performs a sufficient thixotropy at the working execution.

Blending amount of the thixotropy endowing agent per the amount of the main component (for example, a prepolymer having an isocyanate group at the terminals) varies depending on the cases where a thixotropy endowing agent comprising an inorganic filler treated with an organic material and that comprising a polyurea compound are used combinedly or singly. In a case of using merely a thixotropy endowing agent comprising an inorganic filler treated with an organic material, an amount of 50 to 300 parts by weight is preferable, based on 100 parts by weight of the main component. An amount less that 50 parts by weight gives insufficient thixotropy in the resulting composition, with unsatisfactory coating and filling workabilities. An amount exceeding 300 parts by weight causes inferior storage stability, with unsatisfactory coating and filling workabilities.

In a case of using a thixotropy endowing agent comprising a polyurea compound, an amount of 10 to 200 parts by weight is preferable, based on 100 parts by weight of the main component. An amount less than 10 parts by weight gives insufficient thixotropy in the resulting composition, with unsatisfactory coating and filling workabilities, similarly as in the above inorganic filler. An amount exceeding 200 parts by weight causes inferior coating and filling workabilities.

Besides the additives as mentioned above, the highly weatherable, moisture-curable, one-component polyurethane composition according to the present invention may contain other additives, fillers, plasticizers, solvents, and other conventionally used components, so far as they are consistent with the objectives of the invention.

The fillers mentioned above include calcium carbonate, titanium oxide, clay, talc, zinc oxide, glass balloon, carbon black, polyamide, PVC, and the like.

The plasticizer includes, for example, phthalate esters, adipate esters, azelainate esters, sebacate esters, sulfonate esters, trimellitate esters, phosphate esters, fumurate esters, maleate esters, and the like.

Specifically, the phthalate esters include diisodecyl phthalate, dioctyl phthalate, 2-ethylhexyl phthalate, diisononyl phthalate, dibutyl phthalate, butylbenzyl phthalate, diheptyl phthalate, bis(9',10'-epoxyoctadecyl) 4,5-epoxyhexahydrophthalate, and the like. The adipate esters include dioctyl adipate, 2-ethylhexyl adipate, diisononyl adipate, diisodecyl adipate, and the like. The azelainate esters include di(2-ethylhexyl) azelainate, and the like. The sebacate esters include di(2-ethylhexyl) sebacate, and the like. The sulfonate esters include phenyl alkylsulfonates and the like. The trimellitate estes include tri(2-ethylhexyl)trimellitate and the like. The phosphate esters include triphenyl phosphate, tricresyl phosphate, trixylenyl phosphate, cresyl diphenyl phosphate, xylenyl diphenyl phosphate, tris(chloroethyl) phosphate, tris(dichloropropyl) phosphate, tris(β-chloropropyl) phosphate, tris(tribromophenyl) phosphate, tris(dibromophenyl) phosphate, tris(tribromopentyl) phosphate, and the like. The fumarate esters include butyl fumarate, bis(2-methylpropyl) fumarate, diisobutyl fumarate, bis(2-ethylhexyl) fumarate and the like. The maleate esters include dimethyl maleate, diethyl maleate, and the like.

Besides these additives as mentioned above, there may be blended a curing catalyst, such as organic tin catalysts, amine catalysts and organic and acid catalysts (for example, methylhexahydromaleic adid anhydride [Trade name: Hardener HY 1102 BD (manufactured by Ciba-Geigy AG], or [Trade name: RIKACID MH700 (manufactured by SHIN NIPPON RIKA K.K.)] pyromellitic adid, barbituric acid, etc.) adhesiveness agent [for example, 3-glycidyloxypropyltrimethoxysilane, 3-mercaptopropyltrimethoxysilane/burette-type HDI adduct, polyisocyanate [Trade name: SUMIDUR E21-1, E21-2, L75, N75, and N3300, DESMODUR RFE, DESMOSEAL M100 (manufactured by Sumitomo-Bayer Urethane K.K.], [Trade name: BESTANET T-1890 L (manufactured by DEGUSSA HUELLS K.K.) etc.], antioxidants, UV absorbers, organic pigments, and the like.

Highly weatherable, moisture-curable, one-component polyurethane compositions of the present invention are prepared according to any conventional method, for example, under the environment wherein moisture is eliminated as far as possible, for example, under a diminished pressure.

Specifically, a polymer component of the invention (the main component forming a polyurea resin upon curing) is mixed with a photocurable material and a hindered amine photostabilizer and, if desired, with a blocked amine compound and thixotropy endowing agent, in a batch-type double axes kneading mixer. If necessary, the mixture is then blended with a filler, plasticizer and other additives than the above, and further kneaded and defoamed, thereby to obtain the objective composition.

The photocurable material additive in the present moisture-curable, one-component polyurethane composition forms a film at the surface of the cured product. The hindered amine photostabilizer additive in the present composition absorbs UV, thus serving for the high weatherability in the cured product. Also, use of the ordinary prepolymer in the main component allows lower production costs as compared with those using a polyester prepolymer and the moisture-curable, modified silicone one-component compositions.

The blocked amine compound additive gives a sufficient curability to the composition, and excludes such problems as blistering and peeling in the cured product. Furthermore, the blocked amine compound reacts with the photocurable material to form a film. Thus, the weatherable effect of the photocurable material is enhanced, so that the weatherability of the cured composition is more improved.

The thixotropy endowing agent comprising the polyurea compound effectively gives excellent storage stability and thixotropy in the resulting cured composition. Thus, the agent serves for the storage stability, as well as coating and filling workabilities, of the composition, when used as sealants, inner and outer use adhesives, and waterproofing materials for roofs and wall surfaces.

### Examples

The present invention will more fully be described in reference to the working examples, as well as the comparative examples for comparison. "Part" in the examples means part by weight, unless otherwise identified.

### "Synthesis of thixotropy endowing agent dispersed paste (A)"

An isocyanate solution made by dissolving 80 parts of diphenylmethane diisocyanate in 235 parts of diisodecyl phthalate, and an amine solution made by dissolving 40 parts of n-butylamine in 275 parts of diisodecyl phthalate, were introduced into a reaction vessel through each separated quantitative pump in each equivalent amount. The mixture was stirred by means of a static mixer for the reaction, thereby a dispersed paste of a thixotropy endowing agent having multiple urea linkages in the molecule, i.e. thixotropy endowing agent dispersed paste (A) of the invention, being obtained.

### "Preparation of the highly weatherable, moisture-curable, one-component polyurethane composition"

### Example 1

Into a batch-type reaction vessel provided with a double axes kneading mixer were sequentially introduced 150 parts of a prepolymer having a principal chain skeleton of polypropylene oxide and isocyanate group (particularly isocyanate group originated from TDI) at the terminals, and 135 parts of the thixotropy endowing agent dispersed paste (A) as mentioned above [about 26 parts of the solid polyurea compound, when excluding the diisodecyl phthalate from the dispersed paste (A), at room temparatures. Additionally, 135 parts of calcium carbonate, 30 parts of titanium oxide, 75 parts of powdered PVC, 3 parts of calcium oxide, 120 parts of isodecyl phthalate, 9 parts of TMPMA(trimethylolpropane trimethacrylate) or ARONIX M-80602m (manufactured by TOA GOSEI KAGAKU KOGYO K.K.) which was a photocurable material comprising an unsaturated acrylic compound, 2 parts of a hindered amine photostabilizer comprising ADEKASTAB LA-62 (manufactured by ASAHI DENKA K.K.) 2 parts of 3-glycidyloxypropytrimethoxysilane, 0.6 part of dibutyltin dilaurate (DBTDL), 6 parts of an adhesiveness agent (Trade name: SUMIDUR E 21-2 [manufactured by Sumitomo Bayer Urethane K.K.]), 27 parts of xylene, and 10 parts of Solvent A, were added to the reaction vessel.

The mixture was kneaded under stirring in vacuo and then defoamed, thereby to obtain a highly weatherable, moisture-curable, one-component polyurethane composition.

### Example 2

Similar procedure as in Example 1 was repeated, except that additional 7 parts of a blocked amine compound comprising ALDIMIN ALD-1 (manufactured by MISTUI Chemical K.K.) was added and, in place of the dibutyltin dilaurate (DBTDL), 0.6 part of methylhexahydrophtalic acid anhydride (Trade name: Hardner HY 1102 BD [manufactured by Ciba-Geigy AG] or RIKACID MH700 [manufactured by SHIN NIPPON RIKA K.K.]) was added, thereby to obtain a highly weatherable, moisture-curable, one-component polyurethane composition.

### Example 3

Similar procedure as in Example 1 was repeated, except that, in place of the thixotropy endowing agent dispersed paste (A), 270 parts of CALFAMIN 500 (Trade name [manufactured by MARUO Calcium K.K.]) was added; addition of the calcium carbonate was omitted; and, in place of the dibutyltin dilaurate (DBTDL), 0.6 part of methylhexahydrophthalic acid anhydride (Trade name: Hardner HY 1102 BD) [manufactured by Ciba-Geigy AG] or RIKACID MH 700 [SHIN NIPPON RIKA K.K.]) was added, to obtain a highly weatherable, moisture-curable, one-component polyurethane composition.

### Comparative Example 1

Similar procedure as in Example 2 was repeated, except that addition of the TMPMA (trimethylolpropane trimethacrylate) or ARONIX M-8060 (manufactured by TOA GOSEI KAGAKU KOGYO K.K.) which was a photocurable material comprising an unsaturated acrylic compound was omitted, to obtain a moisture-curable, one-component polyurethane composition.

### Comparative Example 2

Similar procedure as in Example 2 was repeated, except that addition of the hindered amine photostabilizer comprising ADEKASTAB LA-62 (manufactured by ASAHI DENKA K.K.) was omitted, to obtain a moisture-curable one-component polyurethane composition.

### Comparative Example 3

Similar procedure as in Example 2 was repeated, except that addition of the TMPMA (trimethylolpropane trimethacrylate) or ARONIX M-8060 (manufactured by TOA GOSEI KAGAKU KOGYO K.K.) which was a photocurable material comprising an unsaturated acrylic compound, and the hindered amine photostabilizer comprising ADEKASTAB LA-62 (manufactured by ASAHI DENKA K.K.) was omitted, to obtain a moisture-curable, one-component polyurethane composition.

The compositions obtainded in Examples 1 to 3 and Comparative Examples 1 to 3 were evaluated as follows. Results from Examples 1 to 3 and from Comparative Examples 1 to 3 are shown in Tables 1 and 2, respectively.

### (1) Extrudability

### Extrudabilities were estimated according to JIS-A-5758-1992 "Sealants for Architectural Use", "4.2 Extrudability".

Thus, each sample composition just after the preparation was filled in a cartridge made of a high density polyethylene, without inclusion of foams, and the cartridge is readily loaded on an air gun. Each sample composition was extruded from the end of air gun having no nozzle with a pressure of 98.0 kPa at a temperature of 20°C, and the period of time until the whole of the sample composition was extruded out of the cartridge was measured. In this test, a shorter period of time for extrusion shows better extrudability of the composition.

### (2) Storage stability

Each test composition was filled in a cartridge as used in the above "extrudability test", and the closed cartridge was stood at a temperature of 20°C under a condition of 55% to 65% relative humidity for one month. Thereafter, the period of time for extrusion of the whole amount of the testing composition out of the cartridge was measured in similar way as in the above "extrudability" test, thereby to estimate the storage ability. In this test, a shorter period of time for extrusion shows better storage stability of the composition.

### (3) Thixotropy (slumping test)

### Thixotropies were estimated according to JIS-A-5758-1992 "Sealants for Architectural Use", "4.3 Slumping Tests".

Thus, three of channeled vessels for slumping tests (made of a corrosion resistive metal, about 1 mm thickness) were provided. Each testing composition was readily filled in each vessel, avoiding the formation of foams, and the surface of the testing composition was smoothed. Then, the testing composition was readily allowed to suspend perpendicularly for 6 hours in a 50°C thermostat. Thereafter, the length from the bottom of the channels in the vessel to the end of point of the hanging down composition was measured (mm) for slump (vertical) value. The estimations were made both of just after and one month after the preperations.

Lower the slump value of the testing composition, better the thixotropy. A slump value exceeding 2 mm may be said not to have enough thixtropy.

### (4) Weathering tests

### Weatherabilities were estimated according to JIS-A-1415-1977 "Accelerated weathering test method for plastic architectural materials".

Thus, each sample composition was cured to form a sheet of about 3 mm thickness, which was then subjected to a weathering test using a sunshine weather meter (manufactured by SUGA SHIKENKI K.K.) for estimation of the surface weatherability.

**Table 1**

| | Ex.1 | Ex. 2 | Ex. 3 |
|---|---|---|---|
| (parts) | | | |
| TDI prepolymer | 150 | 150 | 150 |
| Thixotropy endowing agent Dispersed paste (A) | 135 | 135 | - |
| Diisodecyl phthalate | 120 | 120 | 120 |
| Titanium oxide | 30 | 30 | 30 |
| CALFINE 500 | - | - | 270 |
| Calcium carbonate | 135 | 135 | - |
| Powdered PVC | 75 | 75 | 75 |
| Calcium oxide | 3 | 3 | 3 |
| ARONIX M-8060/TMPMA | 9 | 9 | 9 |
| 3-glycidyloxypropyltrimethoxysilane | 2 | 2 | 2 |
| SUMIDUR E21-2 | 6 | 6 | 6 |
| ADEKASTAB LA-62 | 2 | 2 | 2 |
| ALDIMIN ALD-1 | - | 7 | 7 |
| Methylhexahydrophthalic acid anhydride | - | 0.6 | 0.6 |
| Dibutytlin dilaurate (DBTDL) | 0.6 | - | - |
| Xylene | 27 | 27 | 27 |
| Solvent A | 10 | 10 | 10 |
| Total | 704.6 | 711.6 | 711.6 |
| Extrudability (sec.) (just after preparation) | 1.5 | 1.5 | 1.5 |
| Storage stability (sec.) (after one month) | 1.7 | 1.6 | 2.5 |
| Slump value (vertical, mm) | | | |
| (just after preparation) | 0 | 0 | 0 |
| (after one month) | 0 | 0 | 0 |
| weathering test results (hours) | 1500 | 3000 | 2000 |
| | Cracks | No cracks | cracks |

**Table 2**

| | Comp. Ex.1 | Comp. Ex. 2 | Comp. Ex.3 |
|---|---|---|---|
| (parts) | | | |
| TDI prepolymer | 150 | 150 | 150 |
| Thixotropy endowing agent Dispersed paste (A) | 135 | 135 | 135 |
| Diisodecyl phthalate | 120 | 120 | 120 |
| Titanum oxide | 30 | 30 | 30 |
| CALFINE 500 | - | - | - |
| Calcium carbonate | 135 | 135 | 135 |
| Powdered PVC | 75 | 75 | 75 |
| Calcium oxide | 3 | 3 | 3 |
| ARONIX M-8060/TMPMA | - | 9 | - |
| 3-glycidyloxypropyltrimethoxysilane | 2 | 2 | 2 |
| SUMIDUR E21-2 | 6 | 6 | 6 |
| ADEKASTAB LA-62 | 2 | - | - |
| ALDIMIN ALD-1 | 7 | 7 | 7 |
| Methylhexahydrophthalic acid anhydride | 0.6 | 0.6 | 0.6 |
| Dibutyltin dilaurate (DBTDL) | - | - | - |
| Xylene | 27 | 27 | 27 |
| Solvent A | 10 | 10 | 10 |
| Total | 702.6 | 709.6 | 700.6 |
| Extrudability (sec.) (just after preparation) | 1.6 | 1.5 | 1.5 |
| Storage ability (sec.) (after one month) | 1.7 | 1.7 | 1.7 |
| Slump value (vertical, mm) | | | |
| (Just after preparation) | 0 | 0 | 0 |
| (after one month) | 3 | 0 | 0 |
| Weathering test results (hours) | 1200 | 500 | 200 |
| | Cracks | cracks | cracks |

As shown in Table 1, the cured product from the composition in Example 1 shows cracks after a 1500 hour accelerated weathering test, but it is recognized that it's weatherability is still high enough, when compared with the results in Comparative Examples 1 to 3. The cured product from the composition in Example 2 wherein a blocked amine compound comprising ALDIMIN ALD-1 is added shows no crack after a 3000 hour accelerated weathering test, thus, a significantly high weatherability being identified.

In the cured product from the composition in Example 3, wherein the thixotropy endowing agent used is an inorganic filler treated with an organic material, in place of the polyurea compound, cracks are observed after a 2000 hour accerelated weathering test. This fact shows that the weatherability is inferior to that in Example 2 wherein the thixotropy endowing agent is a polyurea compound, even though the weatherability is still enough when compared with those in Comperative Examples 1 to 3. In other words, the thixotropy endowing agent comprising a polyurea compound gives more advantageous effect on weatherability than that comprising an inorganic filler treated with an organic material. Furthermore, the products in Examples 1 and 2 are identified to be excellent in the extrudability and slump value, thus, also in the thixotropy, as well as in the storage stability, while, the product from Example 3 is inferior in the storage stability to that in Examples 1 and 2. Accordingly, thixotropy endowing agent comprising polyurea compound gives advantageous effect on the storage stability when compared to that comprising an inorganic filler treated with an organic material.

On the other side, products from Comparative Examples 1 to 3 form cracks during 1200 hours, thus, it is identified that they are inferior in the weatherability to those in Examples 1 to 3.

As described herein before, the highly weatherable, moisture-curable, one-component polyurethane compositions of the present invention contain a photocurable material and hindered amin photostabilizer as the additives. Thus, the film forming activity of the photocurable material at the surface of the cured product, and the UV absorbing effect of the hindered amine photostabilizer, serve for the high weatherability in the cured products. Besides, use of an ordinary prepolymer as the main component serves for the lower production cost, when compared with the case of using a polyester prepolymer and moisture-curable, modified silicone one-component compositions.

Use of a blocked amine compound as the additives gives sufficient curability to the composition, and eliminates such problems as blistering and peeling in the cured product, without foaming. Since the blocked amine compound reacts with the photocurable material mentioned above to form a film, the compound enhances the weatherable effect of the photocurable material, thus the weatherability of the cured product from the present composition being much increased.

Use of a thixotropy endowing agent comprising a polyuera compound as the additives serves for effects on the storage stability and thixotropy, so that the resulting composition possesses an excellent storage stability and thixotropy.

The present composition exhibits excellent storage stability, as well as the coating and filling workabilities, when used as sealants, inner and outer use adhesives, and waterproofing materials for roofs and wall surfaces. For example, when a sealant comprising the present composition is applied or filled on a vertical surface, the material steadily stays there and is cured at the sealing places without flowing down, thus, performing the excellent water-tight and airtight effects. Moreover, when a sealant comprising the present composition is applied for sealing between material parts, it functions as a cushion material or buffer material for the expand and contract, vibration and deformation between the material parts.

## Claims

1. A highly weatherable, moisture-curable, one-component polyurethane composition, which is **characterized by** being curable with moisture in the air, and containing a main component, which will form a polyurethane resin upon curing, and additives, wherein said additives comprise one or more photocurable materials selected from the group consisting of unsaturated acrylic compounds, polyvinyl cinnamate and azide-containing compounds, and a hindered amine photostabilizer.

2. The highly weatherable, moisture-curable, one-component polyurethane composition according to Claim 1, which is **characterized by** that said additives additionally contain a blocked amine compound which will form a primary or secondary amino group with moisture.

3. The highly weatherable, moisture-curable, one-component polyurethane composition according to Claim 1 or 2, which is **characterized by** that said photocurable material is an unsaturated acrylic compound.

4. The highly weatherable, moisture-curable, one-component polyurethane composition according to Claim 1 or 2 or 3, which is **characterized by** that said additives further contain a thixotropy endowing agent, comprising an inorganic filler treated with an organic material selected from the group consisting of fatty acids, metal salts of fatty acids, fatty acid esters, resinic acids, surface agents and polyacrylates.

5. The highly weatherable, moisture-curable, one-component polyurethane composition according to Claim 1 or 2 or 3, which is **characterized by** that said additives further contain a thixotropy endowing agent, comprising a polyurea compound represented by the formula:
R¹(NHCON-R²,-R³)ₘ
Wherein R¹ is a residue originated from polyisocyanate; R² and R³ are residues each originated from a monoamine, and one of these residues may be a hydrogen atom; and m is an integer of 2 to 4.

6. The highly weatherable, moisture-curable, one-component polyurethane composition according to Claim 5, which is **characterized by** that said thixotropy endowing agent comprising a polyurea compound is added to the composition in the form of a paste formed by dispersing the agent in a phathalate ester compound.

## Patentansprüche

1. Sehr bewitterungsfeste, feuchtigkeitsaushärtende Einkomponenten-Polyurethanzusammensetzung, die **dadurch gekennzeichnet ist, dass** sie mit Luftfeuchtigkeit aushärtbar ist und eine Hauptkomponente, die auf das Aushärten hin ein Polyurethanharz bildet, und Additive enthält, wobei die Additive ein oder mehrere photoaushärtbare Materialien ausgewählt aus der Gruppe bestehend aus ungesättigten Acrylverbindungen, Polyvinylcinnamat und Azid enthaltenden Verbindungen und einen aus gehindertem Amin bestehenden Photostabilisator umfassen.

2. Sehr bewitterungsfeste, feuchtigkeitsaushärtende Einkomponenten-Polyurethanzusammensetzung nach Anspruch 1, die **dadurch gekennzeichnet ist, dass** die Additive zusätzlich eine blockierte Aminverbindung enthalten, die mittels Feuchtigkeit eine primäre oder sekundäre Aminogruppe bilden.

3. Sehr bewitterungsfeste, feuchtigkeitsaushärtende Einkomponenten-Polyurethanzusammensetzung nach Anspruch 1 oder 2, die **dadurch gekennzeichnet ist, dass** das photoaushärtbare Material eine ungesättigte Acrylverbindung ist.

4. Sehr bewitterungsfeste, feuchtigkeitsaushärtende Einkomponenten-Polyurethanzusammensetzung nach Anspruch 1 oder 2 oder 3, die **dadurch gekennzeichnet ist, dass** die Additive des Weiteren ein Thixotropierungsmittel enthalten, das einen anorganischen Füllstoff umfasst, der mit einem organischen Material behandelt worden ist ausgewählt aus der Gruppe bestehend aus Fettsäuren, Metallsalzen von Fettsäuren, Fettsäureestern, Harzsäuren, oberflächenaktiven Mitteln und Polyacrylaten.

5. Sehr bewitterungsfeste, feuchtigkeitsaushärtende Einkomponenten-Polyurethanzusammensetzung nach Anspruch 1 oder 2 oder 3, die **dadurch gekennzeichnet ist, dass** die Additive des Weiteren ein Thixotropierungsmittel enthalten umfassend eine Polyharnstoffverbindung dargestellt durch die Formel:
R¹(NHCON-R², -R³)ₘ
wobei R¹ ein Rest ist, der aus Polyisocyanat stammt; R² und R³ Reste sind, die jeweils von einem Monoamin stammen und einer dieser Reste ein Wasserstoffatom sein kann; und m eine ganze Zahl von 2 bis 4 ist.

6. Sehr bewitterungsfeste, feuchtigkeitsaushärtende Einkomponenten-Polyurethanzusammensetzung nach Anspruch 5, die **dadurch gekennzeichnet ist, dass** das Thixotropierungsmittel eine Polyharnstoffverbindung umfasst, die der Zusammensetzung in Form einer Paste zugesetzt wird, die durch Dispergieren des Mittels in einer Phthalatesterverbindung gebildet wird.

## Revendications

1. Composition de polyuréthane monocomposant fortement résistante aux intempéries, durcissable à l'humidité, **caractérisée en ce qu'**elle est durcissable sous l'effet de l'humidité de l'air, et contient un composant principal, qui formera une résine de polyuréthane une fois durci, et des additifs, lesquels additifs comprennent un ou plusieurs matériaux photodurcissables choisis dans le groupe consistant en les composés acryliques insaturés, le cinnamate de polyvinyle et les composés contenant un azoture, et un photostabilisant de type amine encombrée.

2. Composition de polyuréthane monocomposant fortement résistante aux intempéries, durcissable à l'humidité selon la revendication 1, **caractérisée en ce que** lesdits additifs contiennent d'autre part un composé à fonction amine bloquée qui formera un groupe amine primaire ou secondaire en présence d'humidité.

3. Composition de polyuréthane monocomposant fortement résistante aux intempéries, durcissable à l'humidité selon la revendication 1 ou 2, **caractérisée en ce que** ledit matériau photodurcissable est un composé acrylique insaturé.

4. Composition de polyuréthane monocomposant fortement résistante aux intempéries, durcissable à l'humidité selon la revendication 1, 2 ou 3, **caractérisée en ce que** lesdits additifs contiennent en outre un agent communiquant une thixotropie, comprenant un agent de remplissage inorganique traité avec un matériau organique choisi dans le groupe consistant en les acides gras, les sels métalliques d'acides gras, les esters d'acides gras, les acides résiniques, les agents de surface et les polyacrylates.

5. Composition de polyuréthane monocomposant fortement résistante aux intempéries, durcissable à l'humidité selon la revendication 1, 2 ou 3, **caractérisée en ce que** lesdits additifs contiennent en outre un agent communiquant une thixotropie, comprenant un composé de type polyurée représenté par la formule :
R¹(NHCON-R², -R³)ₘ
dans laquelle R¹ est un résidu provenant d'un polyisocyanate ; R² et R³ sont des résidus provenant chacun d'une monoamine, et l'un de ces résidus peut être un atome d'hydrogène ; et m est un nombre entier compris entre 2 et 4.

6. Composition de polyuréthane monocomposant fortement résistante aux intempéries, durcissable à l'humidité selon la revendication 5, **caractérisée en ce que** ledit agent communiquant une thixotropie comprenant un composé de type polyurée est ajouté à la composition sous la forme d'une pâte constituée en dispersant l'agent dans un composé de type ester phtalate.
